# EUROPEAN PATENT SPECIFICATION

(11) **EP 4 240 502 B1**
(45) Date of publication and mention of the grant of the patent: **02.04.2025**
(21) Application number: 21794397.6
(22) Date of filing: 27.09.2021
(51) Int. Cl.: B62B 13/00, A63C 5/08, B62M 27/02, B62B 13/08, B62B 15/00, B62B 17/00, B62B 17/06, B62J 1/12, B62J 1/14, B62J 7/06, B62J 9/21, B62J 9/22, B62K 3/00, B62K 5/025, B62K 5/027, B62K 13/08, B62K 13/00, B62K 15/00

(54) **SNOW VEHICLE**
SCHNEEFAHRZEUG
VEHICULE POUR LA NEIGE

(30) Priority: 06.11.2020 FI 20206119; 15.03.2021 FI 20214034 U; 25.05.2021 FI 20214058 U
(43) Date of publication of application: 13.09.2023
(73) Proprietor: Arctic Rides Oy, 70420 Kuopio (FI)
(72) Inventor: LAATIKAINEN, Markku, 70420 Kuopio (FI)
(74) Representative: Kolster Oy Ab
(86) International application number: PCT/FI2021/050633
(87) International publication number: WO 2022/096775

(56) References cited:
- US-A- 4 087 106
- US-B1- 10 059 362
- JANNE KÄPYLEHTO: "Sähköpotkukelkka electric kick-sled", 26 January 2014 (2014-01-26), XP055877028, Retrieved from the Internet <URL:https://www.youtube.com/watch?v=QSRXpXrG15Q> [retrieved on 20220110]

## Description

### FIELD

Various embodiments relate to a snow vehicle.

### BACKGROUND

Natural resources and climate necessitate new solutions for travelling, especially over short distances. E-bikes (or electric bikes), e-scooters and the like are emerging. However, almost 30% of world population lives in areas with a true winter having snow and ice. Naturally, snowmobiles have existed for a long time, but they are too fast, dangerous, and expensive for everyday use on common pavements and roads. Consequently, a tremendous need exists for an everyday vehicle capable of safely and reliably transporting people and goods in snowy and icy conditions.

GB 2195298 B discloses a vehicle resembling a kicksled and employing a motor. US 4,087,106 discloses a three-point contact cambering vehicle with wheels, or alternatively with ice skates or snow skis. WO 2016/170364 A1 discloses a reconfigurable wheeled personal mobility device. On the Internet, various hobbyists also provide motorized kicksleds, but they are rather designed for motorsports and high speeds. An everyday-like motorized kicksled is disclosed in various online videos such as in a Sähköpotkukelkka electric kicksled YouTube video: https://www.youtube.com/watch?v=QSRXpXrG15Q. US 4087106 discloses a snow vehicle according to the preamble of claim 1. A more sophisticated and safe snow vehicle is clearly desirable.

### BRIEF DESCRIPTION

The solution to the problem is the invention disclosed in independent claim 1.

Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1 is a side view illustrating embodiments of a snow vehicle;
FIG. 2 is a top view illustrating embodiments of a snow vehicle;
FIG. 3 illustrates embodiments of a steering arrangement;
FIG. 4 and FIG. 5 illustrates embodiments of a footrest;
FIG. 6 illustrates an embodiment providing extra wheels;
FIG. 7 illustrates an embodiment with a toboggan;
FIG. 8, FIG. 9, FIG. 10, FIG. 11, FIG. 12, and FIG. 13 illustrate various use cases;
FIG. 14, FIG. 15, FIG. 16, FIG. 17, FIG. 18, FIG. 19, FIG. 20, and FIG. 21 illustrate various structural embodiments of the snow vehicle;
FIG. 22, FIG. 23, FIG. 24, and FIG. 25 illustrate various accessory embodiments for the snow vehicle;
FIG. 26 and FIG. 27 illustrate an embodiment providing a seat; and
FIG. 28 illustrates an embodiment, wherein the snow vehicle is capable of transporting the user in a wheelchair.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

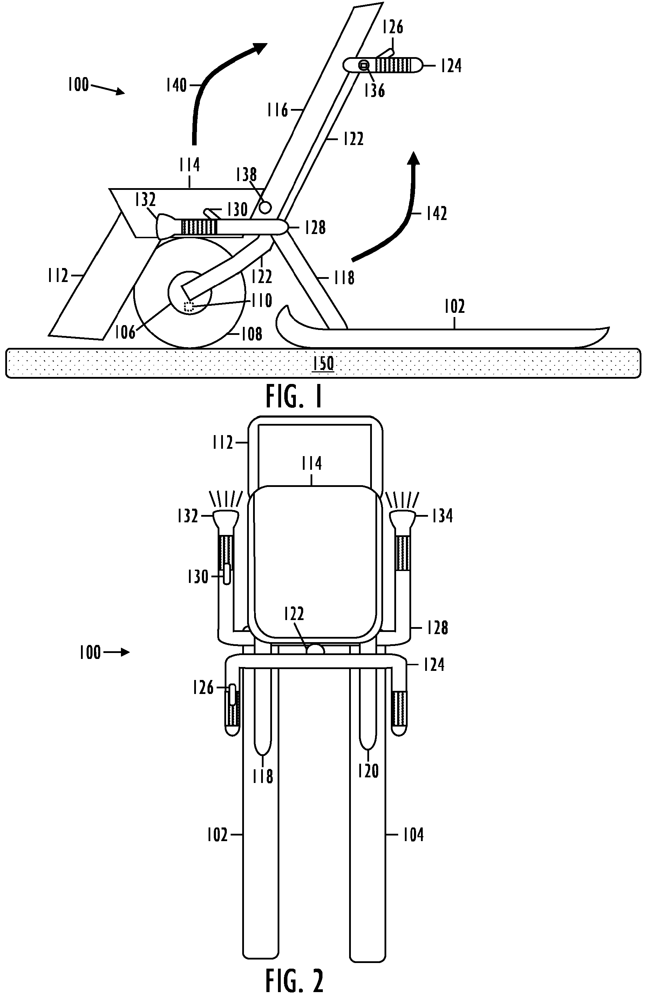

Let us study a snow vehicle 100 with reference to FIG. 1 providing a side view and FIG. 2 providing a top view.

The snow vehicle 100 comprises a pair of runners 102, 104 configured to support the snow vehicle 100 travelling over snow and/or ice 150. As shown in FIG. 2, the pair of runners 102, 104 are placed side by side, so that a driver of the snow vehicle 100 may stand on the pair of runners 102, 104, one foot on each.

In an embodiment, the pair of runners 102, 104 are implemented as a pair of skis dimensioned to glide the snow vehicle 100 over a compressed trail covered by the snow and/or the ice 150, and over a cared road covered by the snow and/or the ice 150. The compressed trail may be a snowmobile track or route, for example. The cared road includes pavements and is typically in public use and snow is ploughed as needed. The snow vehicle 100 may not be designed to operate in deep unbroken snow. Depending on the design and use case, the typical maximum snow depth may be 10-20 centimetres, for example.

The pair of skis may be implemented with synthetic material, possibly augmented by suitable metallic structures. In some use cases, the pair of runners 102, 104 may be implemented, alternatively, or additionally, as a pair of flexible metal runners. Note that two (= pair) is the minimum numbers of runners 102, 104, but in some uses cases it is envisaged that additional runners may be added for length and/or stability. In an embodiment, the pair of runners 102, 104 simultaneously combine the pair of skis with a pair of flexible metal runners placed at bottoms of the skis, which results in that the snow vehicle is mainly supported by the pair of skis while travelling over snow, and by the pair of flexible runners while travelling over ice. Each relatively low flexible metal runner may be embedded in the bottom of the ski so that it extends along the longitudinal axis of the ski. The bottom of the ski may be provided with a groove, which accommodates the low metal runner so that it protrudes partly to contact the ice, but also to protect the bottom of the ski (from debris, rocks, and cobblestones, for example) while driving in the summer with optional rear tyres 602 (described later). The low metal runners may be made of aluminium, for example, and they may be replaceable when beaten-up from use.

The snow vehicle comprises an electric motor 106 and a traction wheel 108, powered by the electric motor 106, and configured to cause a propulsion (or traction) for the snow vehicle 100 while rolling in contact with the snow and/or the ice 150.

The electric motor 106 is powered by one or more rechargeable batteries (not illustrated in FIG. 1). The one or more rechargeable batteries may be of a similar type as used in e-bikes. The one or more rechargeable batteries may be placed on a suitable place within a frame such as under a seat 114 or behind a backrest 116, for example.

Note that the frame of the snow vehicle is similar to a metallic frame used in a kicksled (or spark), but also other kind of structures employing also synthetic material may be designed depending on the use case. As shown, the frame comprises two supports 118, 120 for the pair of runners 102, 104. The supports 118, 120 may also be implemented as a single integrated structure, possibly also carrying the one or more batteries. In an embodiment, the one or more supports 118, 120 are provided with one or more shock absorbers, such as with a telescopic suspension employing a spring (implemented with a steel or titanium spring, compressed air, or an elastomer) and a damper.

The electric motor 106 may be a wheel hub motor incorporated into a hub of the traction wheel 108. The wheel hub motor 106 may be of a similar type and configuration as those used in e-bikes. In an embodiment, the wheel hub motor 106 may contain the one or more batteries. The electric motor 106 may be a direct drive system, wherein the motor 106 directly drives the wheel 108, or the electric motor 106 may be a geared system, wherein the motor 106 drives the wheel 108 via a set of gears. The wheel hub motor 106 improves the stability of the snow vehicle 100 as the centre of gravity is relatively low (when compared to a separate motor placed above the traction wheel 108, for example).

In an embodiment, the frame of the snow vehicle 100 comprises one or more joints 138 configured so that the snow vehicle 100 is collapsible for storage and transport. Possible directions of folding are illustrated in FIG. 1 with arrows 140 and 142.

The traction wheel 108 may be implemented as a pneumatic tyre (with a rim, and either a tubed or tubeless tyre), with a tyre size of 16, 18, 19, 20, 21 or 22 inches, for example. In an embodiment, the traction wheel 108 is of the low pressure -type (possibly designed for low ground pressure such as in an ATV or fat-bike), and/or the traction wheel 108 is of the snow tyre -type, and/or the traction wheel 108 comprises studs. Snow tyres (or winter tyres) usually have a tread design with larger gaps than in traditional (summer) tyres. Some snow tyre have protruding metal or ceramic studs to increase traction on hard-packed snow or ice. In an embodiment, the traction wheel 108 may be similar to that used in an all-terrain vehicle (ATV, also known as quad).

In an embodiment, the snow vehicle 100 may comprise a seat 114 positioned above the traction wheel 108 and configured to accommodate a person. The seat 114 may also include a backrest 116. Both may be manufactured from wood or synthetic material, for example. The advantage of positioning the seat 114 over the traction wheel 108 is that ground grip is improved if there is a person or goods on the seat 114.

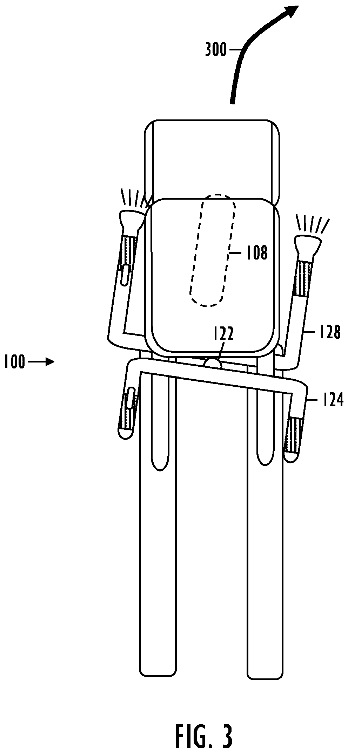

The snow vehicle 100 may comprise a steering arrangement comprising a steering axle 122 coupled with the traction wheel 108. The steering axle 122 may comprise structures similar to those of a bicycle comprising a steerer tube mounted within a frame tube and a fork configured to hold the traction wheel 108. In an embodiment, the fork may contain a set of shock absorbers. The steering arrangement may comprise a handlebar-level steering bar 124 coupled with the steering axle 122 and configured and positioned to enable steering of the traction wheel 108 while a driver is standing on the pair or runners 102, 104. Optionally, the steering arrangement may comprise a seat-level steering bar 128 coupled with the steering axle 122 and configured and positioned to enable steering of the traction wheel 108 while a driver is sitting on the seat 114. As shown in FIG. 3, both steering bars 124, 128 may be similar to those used in a bicycle, wherein the handlebar is coupled to a stem coupled with the steerer tube. The handlebar-level steering bar 124 resembles a handlebar having a straight central section attached to the steering axle 122, with each end curving back towards the driver. The seat-level steering bar 128 resembles an under-seat handlebar of a recumbent.

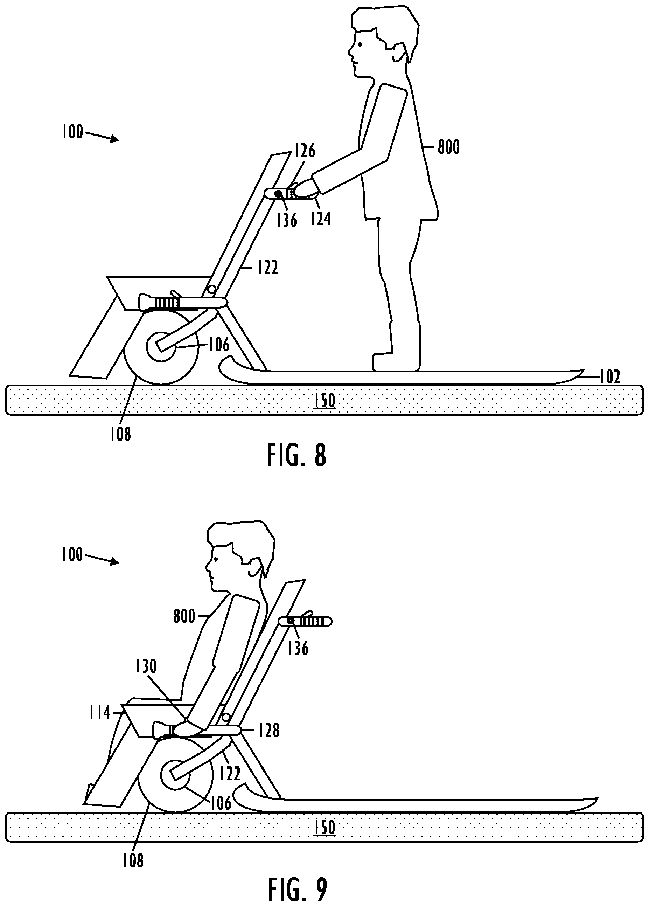

FIG. 8 illustrates the driver 800 standing on the pair or runners 102, 104 and hanging onto the handlebar-level steering bar 124 to steer the traction wheel 108 via the steering axle 122. As shown in the drawings, the pair of runners 102, 104 may extend behind the traction wheel 108, thereby enabling the driver 800 to select a best spot to stand on the pair of runners 102, 104. The pair of runners 102, 104 may thus each be configured to extend from a vicinity of the traction wheel 108 to a rear of the snow vehicle 100 to offer a continuous footrest platform for the driver 800. Even though the bottom of each ski 102, 104 may be horizontal, the top of each ski 102, 104 may be slant inwards to provide a more secure footrest platform for the driver 800.

FIG. 9 illustrates the driver 800 sitting on the seat 114 and grabbing the seat-level steering bar 128 to steer the traction wheel 108 via the steering axle 122.

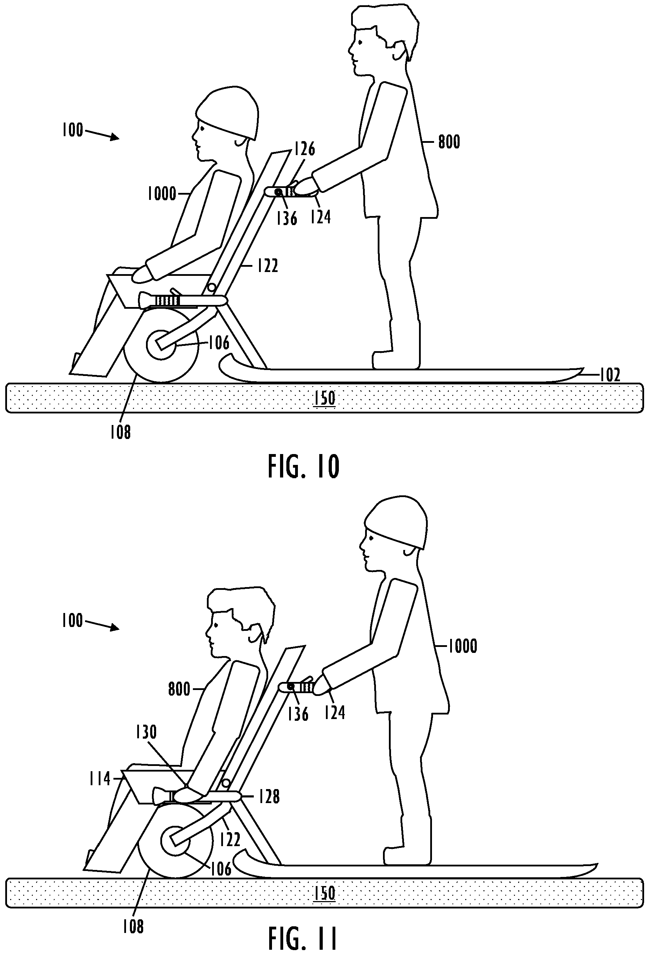

FIG. 10 illustrates the driver 800 standing on the pair or runners 102, 104 and hanging onto the handlebar-level steering bar 124, while a passenger 1000 is sitting on the seat 114. In FIG. 11, the driver 800 sits on the seat 114 and grabs the seat-level steering bar 128, whereas the passenger 1000 is standing on the pair of runners 102, 104. Note that in FIG. 10 and FIG. 11 both the driver 800 and the passenger 1000 may both grab the steering bar 124, 128 and also actually steer. This necessitates some co-ordination and communication, but may also help in a tight spot requiring careful steering.

The traction wheel 108 is positioned in front of the pair of runners 102, 104. Alternatively, the wheel may be positioned between the front part of the pair of runners (like in a normal type of a kicksled), but the traction and steering effect may be improved by the in front -placing. But, if a substantial part of the traction wheel 108 is positioned in front of the pair of runners 102, 104, meaning that a front part of each runner 102, 104 may be side-by-side with a part of the traction wheel, the traction and steering is still improved (when compared to the situation wherein the traction wheel is positioned wholly between the runners).

In an embodiment, the steering arrangement comprises a first accelerator lever 126 coupled with the handlebar-level steering bar 124 and a second accelerator lever 130 coupled with the seat-level steering bar 128. The steering arrangement comprises a power switch 136 configured to enable the first accelerator lever 126 in a first switch position and the second accelerator lever 130 in a second switch position. The power switch 136 is configured also to have an off position, besides the two on positions (= the first and second switch positions). The power switch 136 may operate with an ignition key or some other access control means to prohibit unauthorized use. The accelerator lever 126, 130 may be implemented as a thumb throttle.

In effect, this means that the driver 800 may choose which accelerator lever 126/130 to use: in the use case of FIG. 10, the driver 800 enables the first accelerator lever 126, whereas in FIG. 11, the driver 800 enables the second accelerator lever 130. In this way, the passenger 1000 cannot accelerate as his/her accelerator lever is not functional.

In an embodiment, the power switch 136 may additionally, or alternatively, be configured to operate in at least two power positions, wherein the first power position provides only a limited power from the electric motor 106 (or a limited maximum speed for the snow vehicle 100), and the second power position provides a full power from the electric motor 106 (or an unlimited maximum speed for the snow vehicle 100). Note that an optional mechanical limiter may be provided for the power switch 136: when in use, the mechanical limiter only allows the first power position for the power switch 136, whereby an elderly person or a young person may safely drive the snow vehicle 100.

In an embodiment illustrated in FIG. 3, forward-facing ends of the seat-level steering bar 128 comprise headlights 132, 134 configured to turn in unison with the steering axle 122. FIG. 3 also illustrates the principle of steering by turning the traction wheel 108, whereby the snow vehicle 100 advances into the direction of arrow 300. In another embodiment, a clamp-mounted headlight (not illustrated) may be fixed to a frame tube, a steering bar 124, or to another suitable location in the front end of the snow vehicle 100.

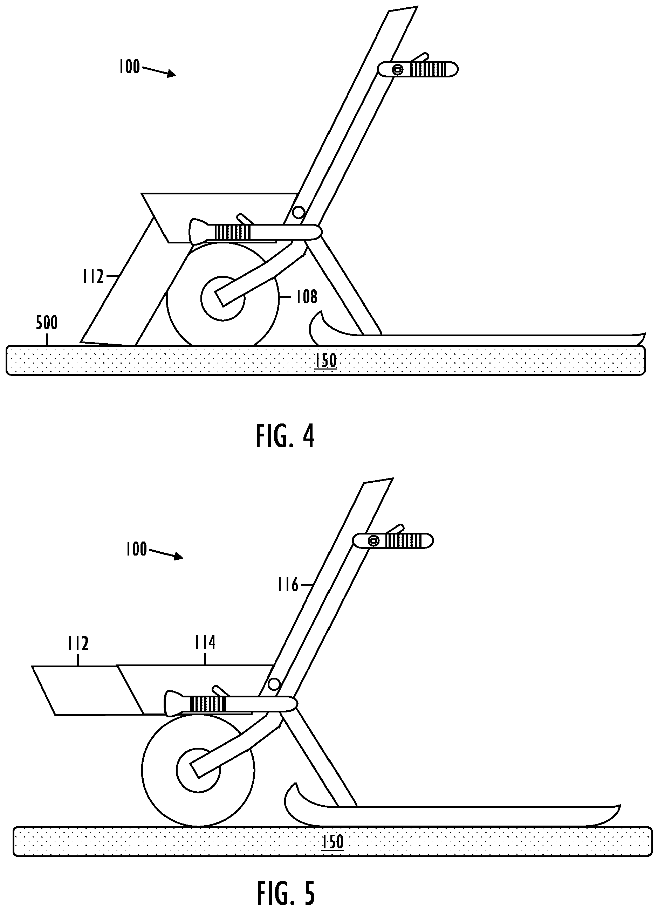

FIG. 4 illustrates an embodiment, wherein the snow vehicle 100 comprises a footrest 112 configured and positioned so that it acts as a front ski in contact with an upper surface 500 of the snow 150 while the traction wheel 108 is partly buried deeper in the snow 150. In an additional embodiment, the footrest 112 is coupled by a joint with a frame of the snow vehicle 100 so that the footrest 112 is configured to follow a topography of the upper surface 500 of the snow 150.

FIG. 5 illustrates an embodiment, wherein the footrest 112 is configured to swivel into a position accommodating goods placed on the seat 114. Furthermore, the backrest 116 may be configured so that it may swivel to cover as a lid the extended compartment formed by the seat 114 and the footrest 112. Alternatively, the footrest 112 may be configured to swivel so that it covers as a lid the compartment formed by the seat 114.

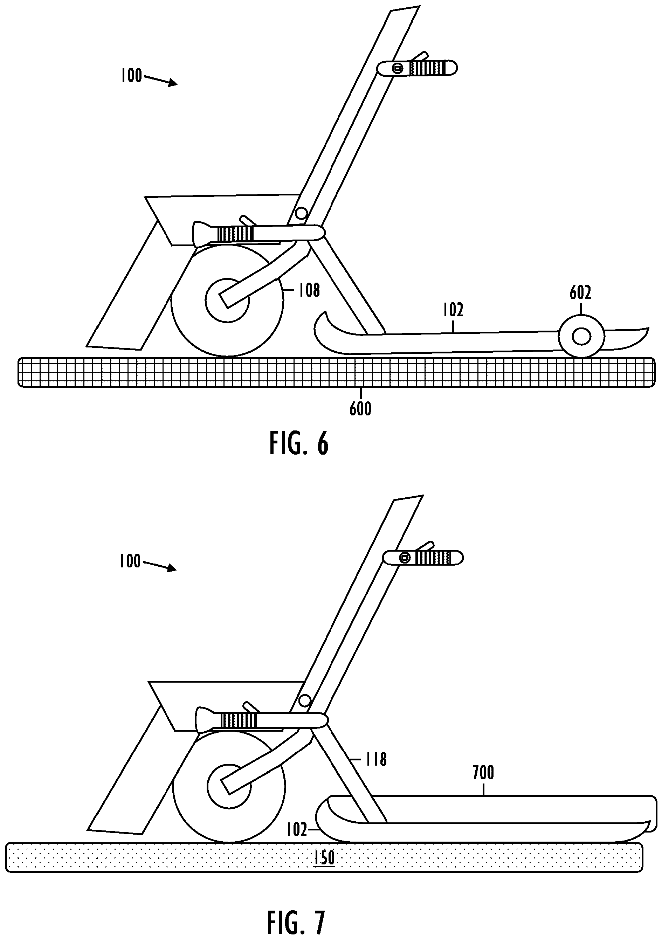

In an embodiment illustrated in FIG. 6, the snow vehicle 100 comprises at least two tyres 602 couplable with the pair of runners 102. The at least two tyres 602 are configured to, in a drive position, support the snow vehicle 100 travelling over a surface 600 having no snow and/or ice or having the snow and/or the ice covered with gravel. As shown, each tyre may be 602 attachable to the back end of each runner 102, 104. The tyres 602 may be of the solid type used in rollerblades, but they may also be pneumatic. Additional tyres may be placed in front of the runners 102, 104, although as shown in FIG 6, the runners 102, 104 may be lifted off the ground surface 600 even with a pair of tyres 602. The at least two tyres 602 may be removably attachable. Another option is that the at least two tyres 602 are attached to the runners 102, 104 so that that may be positioned between the drive position and a storage position (wherein the at least two tyres 602 do not contact the ground beneath).

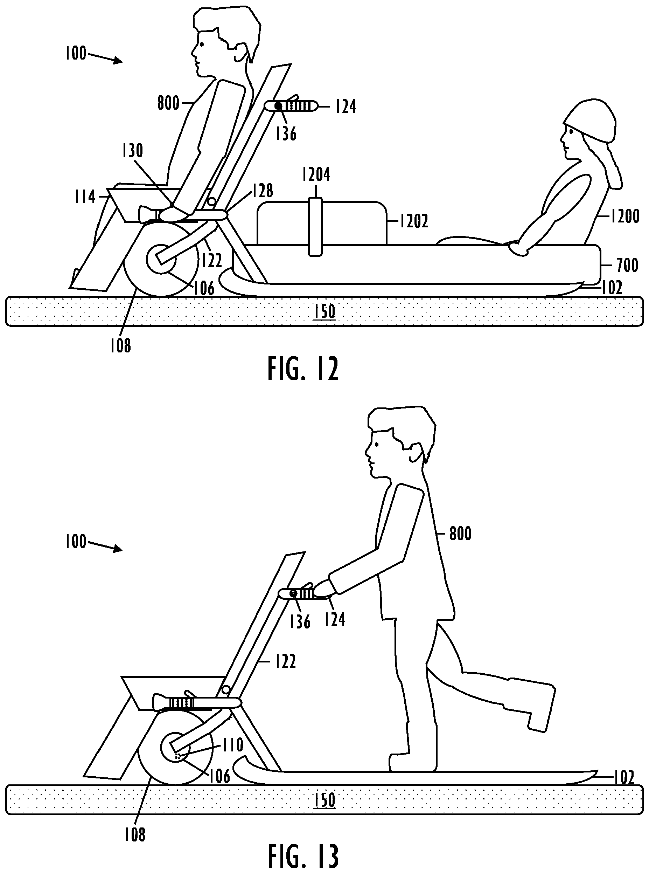

In an embodiment illustrated in FIG. 13, the electric motor 106 comprises a disconnect mechanism 110 to disconnect the electric motor 106 from the traction wheel 108 enabling the traction wheel 108 to freewheel while the snow vehicle 100 is powered by the driver kicking the snow and/or the ice 150 by foot. Note that the freewheeling may also take placing while riding down a hill to save the one or more batteries. In an embodiment, the electric motor 106 is configured to implement a braking functionality by hindering or stopping the rolling of the traction wheel 108. Such braking may also be regenerative, i.e., during the braking, the one or more batteries are recharged.

In an embodiment, the electric motor 106 is configured to rotate the traction wheel 108 in reverse to back up the snow vehicle 100.

In an embodiment illustrated in FIG, 12, the pair of runners 102, 104 is configured to accommodate a toboggan 700 configured to transport one or more persons 1200 and/or goods 1202 (while the driver is sitting on the seat 114, or even standing on the pair of runners 102, 104). As shown, the toboggan 700 may be provided with fastening means 1204 to secure the goods 1202 during the ride. Naturally, the toboggan 700 may be provided with seating arrangements for the passengers 1200.

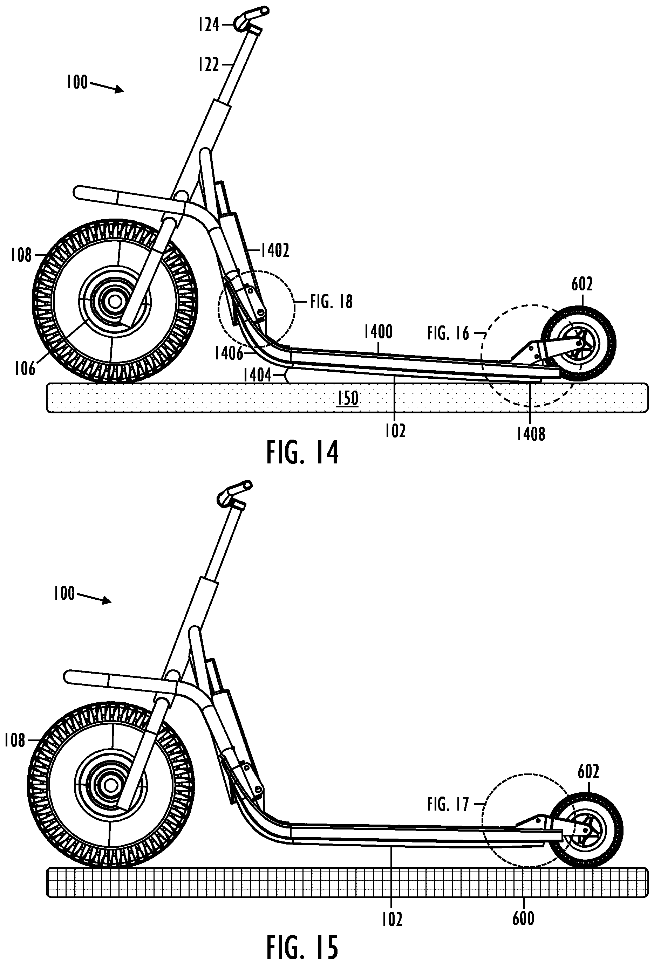

Let us next study FIG. 14, FIG. 15, FIG. 16, FIG. 17, FIG. 18, FIG. 19, FIG. 20, and FIG. 21, which illustrate various structural embodiments of the snow vehicle 100.

In FIG. 14, the snow vehicle 100 is provided with the earlier explained steering arrangement comprising the steering axle 122 coupled with the traction wheel 108 and the handlebar-level steering bar 124 coupled with the steering axle 122 and configured and positioned to enable steering of the traction wheel 108 while the driver 800 is standing on the pair or runners 102, 104.

The traction wheel 108 is positioned in front of the pair of runners 102, 104. Furthermore, the pair of runners 102, 104 are each configured to incline so that a front 1406 of the runner 102, 104 is higher than a rear 1408 of the runner 102, 104. The inclination is clearly seen in FIG. 14: an angle 1404 is shown between a runner 102 and a straight surface of the snow and/or ice 150. As shown in the drawings, the pair of skis 102, 104 each have a ski tip in the front, but each may also have a ski tip in the rear (to enable easier backing up).

Note that as explained earlier, the pair of skis 102, 104 may be implemented with synthetic material, possibly augmented by suitable metallic structures such as a part 1400 of the frame of the snow vehicle 100.

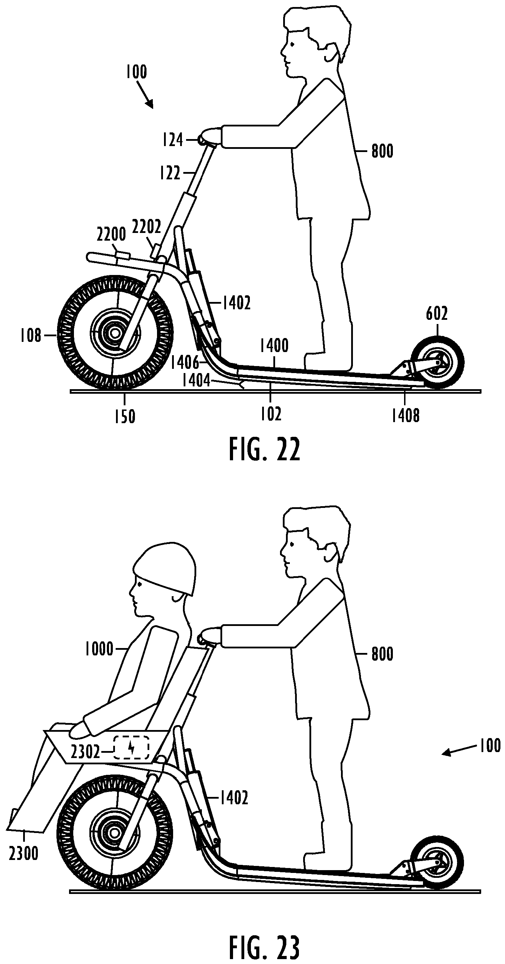

As shown in FIG. 22, the driver 800 is standing between the front 1406 of the runners 102, 104 and the rear 1408 of the runners 102, 104. When there is little or no loose snow on the ground 150, the snow vehicle 100 touches the ground 150 with the traction wheel 108 and the rears 1408 of the runners 102, 104. This increases the stability of the snow vehicle 100, and also also minimizes the friction between the runners 102, 104 and the ground 150. However, if there is more snow, the fronts 1406 of the runners 102, 104 glide over the snow 150, and the friction between the runners 102, 104 and the snow is again minimized (as the fronts 1406 of the runners 102, 104 glide over the snow instead of ploughing the snow).

The snow vehicle 100 of FIG. 14 is also provided with the earlier explained at least two tyres 602 coupled with the pair of runners 102, 104. The tyres 602 may be switched between two positions.

FIG. 15 illustrates the tyres 602 in a drive position, wherein the tyres 602 support the snow vehicle 100 travelling over a surface 600 having no snow and/or ice or having the snow and/or the ice covered with gravel. The tyres 602 may be height adjustable in the drive position.

FIG. 14 illustrates the tyres 602 in a storage position, wherein the tyres 602 let the pair of runners 102, 104 to support the snow vehicle 100 travelling over the snow and/or ice 150. As shown in FIG. 14, the tyres 602 may be swivelled or folded so that they do not support the weight of the snow vehicle 100 on the snow and/or ice 150 beneath (a slight contact with the snow and/or ice 150 may remain).

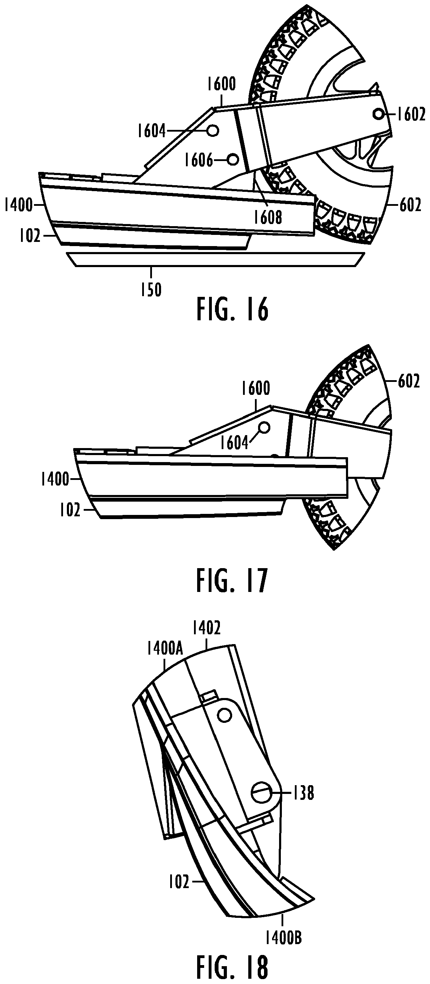

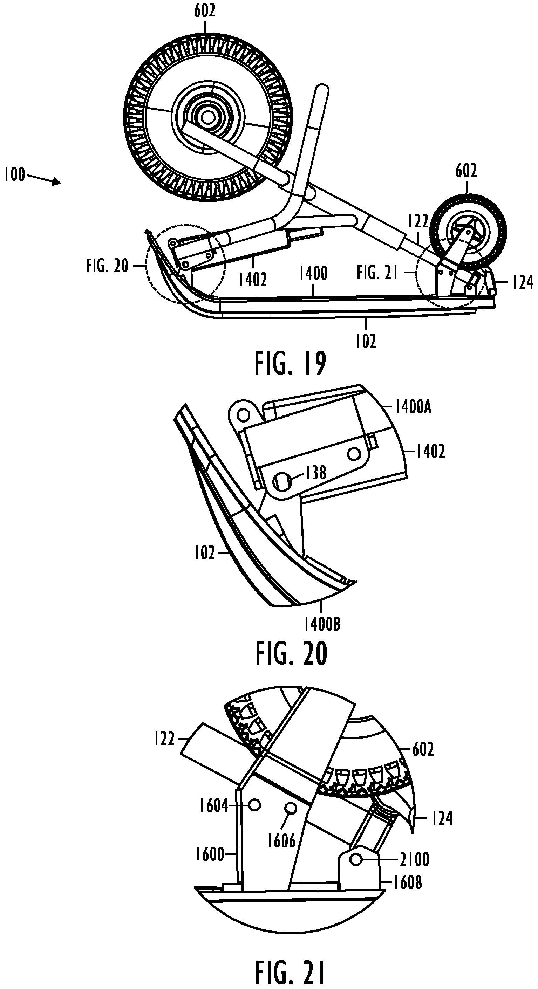

FIG. 16 and FIG. 17 illustrate a detail of a mechanism enabling the tyres 602 to move between the storage position and the drive position, and also enabling the tyres 602 to be height adjustable in the drive position. The mechanism comprises an arm 1600 coupled with the frame 1400 at one end and to a hub of the tyre 602 at the other end with a fixing 1602. The arm 1600 may swivel from the storage position of FIG. 16 to the drive position of FIG. 17. The arm 1600 may be provided with holes 1604, 1606. A support 1608 is fixedly coupled with the frame 1400 and provided with a protruding spring-loaded pin 2100 as shown in FIG. 21. The driver may then adjust the height of each tyre 602 by guiding the spring-loaded pin 2100 to the hole 1604 or the hole 1606. Note that the number of holes 1604, 1606 in our example is two, but more holes 1604, 1606 may be used to provide more precise height adjustment.

FIG. 19 illustrates a collapsed snow vehicle 100, enabled by the earlier explained embodiment, wherein the frame of the snow vehicle 100 comprises one or more joints 138 configured so that the snow vehicle 100 is collapsible for storage and transport.

FIG. 18 illustrates a detail of the drive ready snow vehicle 100, whereas FIG. 20 illustrates a collapsed snow vehicle 100, both enabled by the joint 138 connecting two parts 1400A, 1400B of the frame.

FIG. 21 illustrates a detail of the mechanism 1600, 1608 enabling the tyres 602 to move between the storage position and the drive position. As shown, the arm 1600 is moved so that the collapsed snow vehicle 100 is as compact as possible.

Let us next study FIG. 22, FIG. 23, FIG. 24, and FIG. 25, which illustrate various accessory embodiments for the snow vehicle 100.

As shown in FIG. 22, the snow vehicle 100 is of the type with the steering arrangement comprising the steering axle 122 coupled with the traction wheel 108, and the handlebar-level steering bar 124 coupled with the steering axle 122 and configured and positioned to enable steering of the traction wheel 108 while the driver 800 is standing on the pair or runners 102, 104. The snow vehicle 100 comprises an attachment mechanism 2200 configured to accommodate in front of the steering axle 122 an accessory.

In an embodiment of FIG. 23, the accessory is a passenger seat 2300 accommodating a passenger 1000 (such as a child, a juvenile, or an adult, or even a pet such as a dog or a cat). The passenger seat may also be a multi-use bench (possibly containing a storage space).

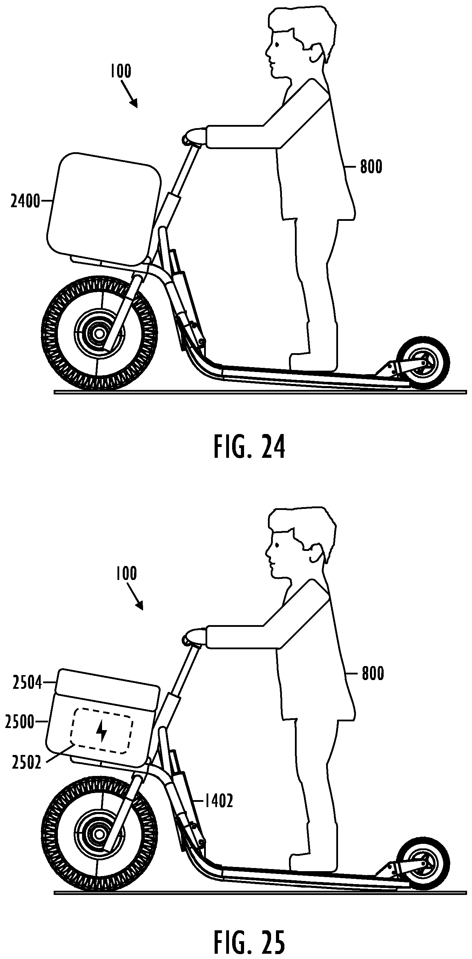

In an embodiment of FIG. 24, the accessory is a storage box 2400 (or a basket, for example).

In an embodiment of FIG. 25, the accessory is a cool box 2500 or heat box 2500.

Note that besides these examples, the accessory may also be another type of usable extension to the functionalities of the snow vehicle 100 including, but not being limited to: a music player, a snow plough, a snowblower, one or more extra rechargeable batteries.

In an embodiment, the snow vehicle 100 comprises one or more rechargeable batteries 1402 configured to provide electric power to the electric motor 106, and a power output 2202 configured to provide electric power 2302, 2502 for the accessory 2300, 2500 from the one or or more rechargeable batteries 1402. Consequently, the power output 2202 may provide electric power 2302, 2502 to warm the seat 2300, to cool the cool box 2500, to heat the heat box 2500, to power the music player, to power the snowblower, etc. Note that as the accessory may include one or more extra rechargeable batteries, the snow vehicle 100 may be provided with a power input to power the electric motor 106. Note that the accessory requiring the electric power may also include one or more rechargeable batteries to provide extra or sole electric power for the accessory. Note also that the accessory may comprise additional parts, such as a lid 2504, a lock, fixing points for carrying load, hooks, a USB (Universal Serial Bus) interface, etc.

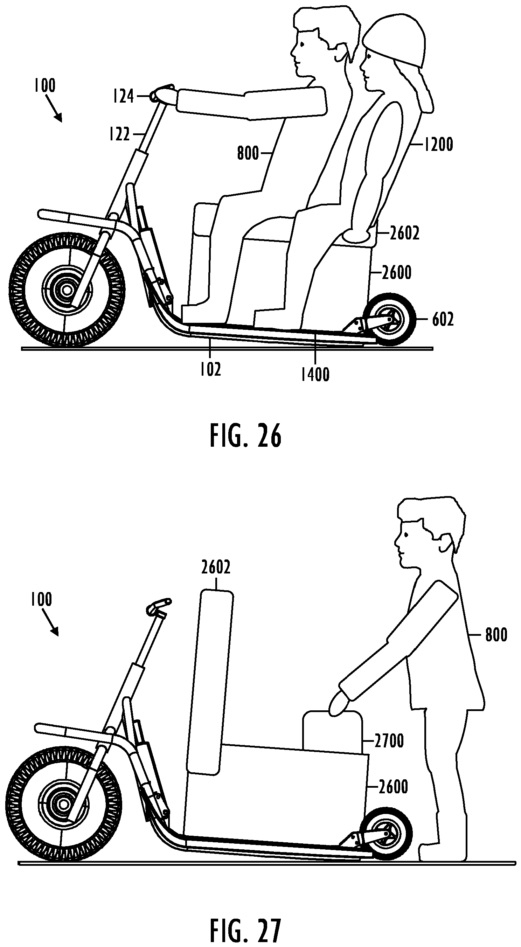

In an embodiment illustrated in FIG. 26 and FIG. 27, the snow vehicle comprises a seat 2600 positioned between the pair of runners 102, 104 and configured to seat at least the driver 800. As shown in FIG. 26, the seat 2600 may be long enough to seat the passenger 1200 (or even two passengers 1200, depending on the length of the seat 200 and the physical dimensions of the passengers 1200). The seat 2600 is dimensioned so that the driver 800, while seated, steers the snow vehicle 100 by turning the handlebar-level steering bar 124. The steering axle 122 may comprise a telescopic structure, which enables the driver 800 to adjust the height of the steering bar 124. The driver 800 and the passenger 1200 may keep their feet on the pair of runners 102, 104, or on the part 1400 of the frame. The seat 2600 may be fixedly placed on the snow vehicle 100, or alternatively, the seat 2600 may be removably attachable to the snow vehicle 100, enabling the driver 800 to switch between driving seated or standing. FIG. 27 illustrates that the seat 2600 may comprise a cover 2602, which may swivel to an open position, enabling loading of goods 2700 inside the seat 2602 for transportation. Alternatively, the seat 2600 may comprise a door on the side wall, and the door may be opened to load the goods 2700 into the seat 2600. The seat 2600 may be placed low so that the floor of the luggage space is at a slightly higher level then the pair of the runners 102, 104 (in order that the bottom of the seat 2600 does not abrade against the snow and/or ice 150). The luggage space within the seat 2600 may also be open at one or both ends (or even open at all four sides), thereby enabling loading and transportation of long objects (such as skis, etc.). The seat 2600 may also be a bench supported by legs (by four legs rising from the pair of runners 102, 104, for example), and, optionally, provided with a floor between the pair of runners 102, 104, thereby providing a flexible cargo space under the seat 2600.

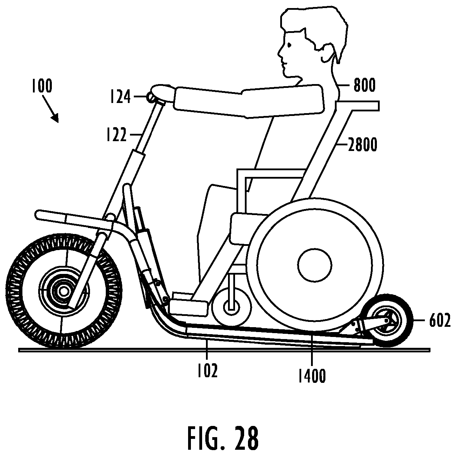

In an embodiment illustrated in FIG. 28, the snow vehicle 100 is capable of transporting the driver 800 in a wheelchair 2800. The wheelchair 2800 may be a manual self-propelled wheelchair or a powered wheelchair, but also another kind of mobility aid vehicle such as a mobility scooter. Naturally, the structures of the snow vehicle 100 need to be designed to support and haul the extra weight of the mobility aid vehicle 2800. The snow vehicle 100 is configured to accommodate the mobility aid vehicle 2800. The mobility aid vehicle 2800 may be on top of the pair of runners 102, 104, or on the part 1400 of the frame. The snow vehicle 100 may be configured to dock the mobility aid vehicle 2800 to the snow vehicle 100. A mechanical connection (not illustrated) may be provided to fix the mobility aid vehicle 2800 immovably to the snow vehicle 100. A suitably formed ramp (not illustrated) may be provided to enable the driver 800 on the mobility aid vehicle 2800 to board the snow vehicle 100. While riding the snow vehicle 100, the driver 800 may be seated on the mobility aid vehicle 2800 (on the wheelchair or the mobility scooter, for example). The steering axle 122 may comprise a telescopic structure, which enables the driver 800 to adjust the height of the steering bar 124. The steering axle 122 may also comprise a swivelling structure, which enables the driver 800 to adjust a distance to the steering bar 124.

The described embodiments provide a safe and easy to use snow vehicle 100 for everyday use by ordinary people. As such, it may resemble an e-bike, possibly meeting some legislation requirements such as a top speed of 15 km/h, 25 km/h, or some other nationally mandated limit. Also, legal requirements set for the dimensions of a street-legal vehicle may be taken into account in the design. Naturally, as the described snow vehicle 100 defines a new type of vehicle, the legislation is still emerging.

Even though the invention has been described with reference to one or more embodiments according to the accompanying drawings, it is clear that the invention is not restricted thereto but can be modified in several ways within the scope of the appended claims. The invention is defined by claim1.

## Claims

1. A snow vehicle (100) comprising:
a pair of runners (102, 104) configured to support the snow vehicle (100) travelling over snow and/or ice (150);
an electric motor (106); and
a traction wheel (108), powered by the electric motor (106), and configured to cause a propulsion for the snow vehicle (100) while rolling in contact with the snow and/or the ice (150),
wherein the traction wheel (108) is positioned in front of the pair of runners (102, 104) and **characterised in that** the snow vehicle (100) is of a kicksled type.

2. The snow vehicle of claim 1, wherein the pair of runners (102, 104) are each configured to incline so that a front (1406) of the runner (102, 104) is higher than a rear (1408) of the runner (102, 104).

3. The snow vehicle of any preceding claim, wherein the pair of runners (102, 104) comprise a pair of skis dimensioned to glide the snow vehicle (100) over a compressed trail covered by the snow and/or the ice (150), and over a cared road covered by the snow and/or the ice (150).

4. The snow vehicle of any preceding claim, wherein the snow vehicle (100) comprises:
a seat (114) positioned above the traction wheel (108) and configured to accommodate a person; and
a steering arrangement comprising a steering axle (122) coupled with the traction wheel (108), a handlebar-level steering bar (124) coupled with the steering axle (122) and configured and positioned to enable steering of the traction wheel (108) while a driver is standing on the pair or runners (102, 104), and a seat-level steering bar (128) coupled with the steering axle (122) and configured and positioned to enable steering of the traction wheel (108) while a driver is sitting on the seat (114).

5. The snow vehicle of claim 4, wherein the steering arrangement comprises a first accelerator lever (126) coupled with the handlebar-level steering bar (124), a second accelerator lever (130) coupled with the seat-level steering bar (128), and a power switch (136) configured to enable the first accelerator lever (126) in a first switch position and the second accelerator lever (130) in a second switch position.

6. The snow vehicle of claim 4 or 5, wherein forward-facing ends of the seat-level steering bar (128) comprise headlights (132, 134) configured to turn in unison with a steering axle (122).

7. The snow vehicle of any preceding claim, wherein the snow vehicle (100) comprises a footrest (112) configured and positioned so that it acts as a front ski in contact with an upper surface (500) of the snow (150) while the traction wheel (108) is partly buried deeper in the snow (150).

8. The snow vehicle of claim 7, wherein the footrest (112) is coupled by a joint with a frame of the snow vehicle (100) so that the footrest (112) is configured to follow a topography of the upper surface (500) of the snow (150).

9. The snow vehicle of claim 8, wherein the footrest (112) is configured to swivel into a position accommodating goods placed on the seat (114).

10. The snow vehicle of any preceding claim, wherein the snow vehicle (100) comprises at least two tyres (602) coupled with the pair of runners (102, 104) and configured to, in a drive position, be height adjustable and support the snow vehicle (100) travelling over a surface (600) having no snow and/or ice or having the snow and/or the ice covered with gravel, and, in a storage position, let the pair of runners (102, 104) to support the snow vehicle (100) travelling over the snow and/or ice (150).

11. The snow vehicle of any preceding claim, wherein the traction wheel (108) is of the low pressure -type, and/or the traction wheel (108) is of the snow tyre -type, and/or the traction wheel (108) comprises studs.

12. The snow vehicle of any preceding claim, wherein the electric motor (106) comprises a disconnect mechanism (110) to disconnect the electric motor (106) from the traction wheel (108) enabling the traction wheel (108) to freewheel while the snow vehicle (100) is powered by the driver kicking the snow and/or the ice (150) by foot.

13. The snow vehicle of any preceding claim, wherein the electric motor (106) is configured to rotate the traction wheel (108) in reverse to back up the snow vehicle (100).

14. The snow vehicle of any preceding claim, wherein the pair of runners (102, 104) is configured to accommodate a toboggan (700) configured to transport one or more persons (1200) and/or goods (1202).

15. The snow vehicle of any preceding claim, wherein a frame of the snow vehicle (100) comprises one or more joints (138) configured so that the snow vehicle (100) is collapsible for storage and transport.

16. The snow vehicle of any preceding claim, wherein the snow vehicle (100) comprises:
a steering arrangement comprising a steering axle (122) coupled with the traction wheel (108), a handlebar-level steering bar (124) coupled with the steering axle (122) and configured and positioned to enable steering of the traction wheel (108) while a driver is standing on the pair or runners (102, 104); and
an attachment mechanism (2200) configured to accommodate in front of the steering axle (122) an accessory, the accessory comprising one or more of the following: a passenger seat (2300), a storage box (2400), a cool box (2500), a heat box (2500), a music player, a snow plough, a snowblower, one or more extra rechargeable batteries.

17. The snow vehicle of claim 16, wherein the snow vehicle (100) comprises:
one or more rechargeable batteries (1402) configured to provide electric power to the electric motor (106); and
a power output (2202) configured to provide electric power (2302, 2502) for the accessory (2300, 2500) from the one or or more rechargeable batteries (1402).

18. The snow vehicle of any preceding claim, wherein the snow vehicle (100) comprises:
a seat (2600) positioned between the pair of runners (102, 104) and configured to seat at least a driver (800).

19. The snow vehicle of any preceding claim, wherein the snow vehicle (100) is configured to accommodate a mobility aid vehicle (2800).

20. The snow vehicle of any preceding claim, wherein the pair of runners (102, 104) are each configured to extend from a vicinity of the traction wheel (108) to a rear of the snow vehicle (100) to offer a continuous footrest platform for the driver (800).

## Patentansprüche

1. Schneefahrzeug (100), das Folgendes umfasst:
ein Paar von Kufen (102, 104), die dazu ausgelegt sind, das Schneefahrzeug (100), das über Schnee und/oder Eis (150) fährt, zu stützen;
einen Elektromotor (106); und
ein Traktionsrad (108), das vom Elektromotor (106) mit Energie versorgt wird und dazu ausgelegt ist, einen Antrieb für das Schneefahrzeug (100) zu bewirken, während es in Kontakt mit dem Schnee und/oder dem Eis (150) rollt,
wobei das Traktionsrad (108) vor dem Paar von Kufen (102, 104) positioniert und **dadurch gekennzeichnet ist, dass** das Schneefahrzeug (100) vom Typ eines Tretschlittens ist.

2. Schneefahrzeug nach Anspruch 1, wobei das Paar von Kufen (102, 104) jeweils dazu ausgelegt sind, sich derart zu neigen, dass eine Vorderseite (1406) der Kufe (102, 104) höher ist als eine Rückseite (1408) der Kufe (102, 104).

3. Schneefahrzeug nach einem der vorhergehenden Ansprüche, wobei das Paar von Kufen (102, 104) ein Paar von Skiern umfassen, die dimensioniert sind, um das Schneefahrzeug (100) über eine komprimierte Spur, die von dem Schnee und/oder dem Eis (150) bedeckt ist, und über eine gepflegte Straße, die von dem Schnee und/oder dem Eis (150) bedeckt ist, zu gleiten.

4. Schneefahrzeug nach einem der vorhergehenden Ansprüche, wobei das Schneefahrzeug (100) Folgendes umfasst:
einen Sitz (114), der über dem Traktionsrad (108) positioniert und dazu ausgelegt ist, eine Person aufzunehmen; und
eine Lenkanordnung, die eine Lenkachse (122), die an das Traktionsrad (108) gekoppelt ist, einen Lenkholm (124) auf Höhe einer Lenkstange, der an die Lenkachse (122) gekoppelt und dazu ausgelegt und positioniert ist, eine Lenkung des Traktionsrads (108) zu ermöglichen, während ein Fahrer auf dem Paar von Kufen (102, 104) steht, und einen Lenkholm (128) auf Sitzhöhe, der an die Lenkachse (122) gekoppelt und dazu ausgelegt und positioniert ist, eine Lenkung des Traktionsrads (108) zu ermöglichen, während ein Fahrer auf dem Sitz (114) sitzt.

5. Schneefahrzeug nach Anspruch 4, wobei die Lenkanordnung einen ersten Gashebel (126), der an den Lenkholm (124) auf Höhe der Lenkstange gekoppelt ist, einen zweiten Gashebel (130), der an den Lenkholm (128) auf Sitzhöhe gekoppelt ist, und einen Energieschalter (136) umfasst, der dazu ausgelegt ist, den ersten Gashebel (126) in einer ersten Schaltposition und den zweiten Gashebel (130) in einer zweiten Schaltposition zu aktivieren.

6. Schneefahrzeug nach Anspruch 4 oder 5, wobei die nach vorn weisenden Enden des Lenkholms (128) auf Sitzhöhe Scheinwerfer (132, 134) umfassen, die dazu ausgelegt sind, sich zusammen mit einer Lenkachse (122) zu drehen.

7. Schneefahrzeug nach einem der vorhergehenden Ansprüche, wobei das Schneefahrzeug (100) eine Fußstütze (112) umfasst, die derart ausgelegt und positioniert ist, dass sie als ein vorderer Ski fungiert, der mit einer Oberfläche (500) des Schnees (150) in Kontakt ist, während das Traktionsrad (108) teilweise tiefer in den Schnee (150) eingegraben ist.

8. Schneefahrzeug nach Anspruch 7, wobei die Fußstütze (112) über ein Gelenk an einen Rahmen des Schneefahrzeugs (100) derart gekoppelt ist, dass die Fußstütze (112) dazu ausgelegt ist, einer Topographie der Oberfläche (500) des Schnees (150) zu folgen.

9. Schneefahrzeug nach Anspruch 8, wobei die Fußstütze (112) dazu ausgelegt ist, in eine Position zu schwenken, in die Waren aufgenommen sind, die auf dem Sitz (114) platziert sind.

10. Schneefahrzeug nach einem der vorhergehenden Ansprüche, wobei das Schneefahrzeug (100) mindestens zwei Reifen (602) umfasst, die an das Paar von Kufen (102, 104) gekoppelt und dazu ausgelegt sind, in einer Fahrposition höhenverstellbar zu sein und das Schneefahrzeug (100) zu stützen, das über eine Fläche (600) fährt, die keinen Schnee und/oder kein Eis aufweist oder den Schnee und/oder das Eis aufweist, der bzw. das mit Schotter bedeckt ist, und in einer verstauten Position das Paar von Kufen (102, 104) das Schneefahrzeug (100) stützen zu lassen, das über den Schnee und/oder das Eis (150) fährt.

11. Schneefahrzeug nach einem der vorhergehenden Ansprüche, wobei das Traktionsrad (108) der Niederdrucktyp ist und/oder das Traktionsrad (108) der Schneereifentyp ist und/oder das Traktionsrad (108) Bolzen umfasst.

12. Schneefahrzeug nach einem der vorhergehenden Ansprüche, wobei der Elektromotor (106) einen Trennmechanismus (110) umfasst, um den Elektromotor (106) vom Traktionsrad (108) zu trennen, um es dem Traktionsrad (108) zu ermöglichen, frei zu laufen, während das Schneefahrzeug (100) vom Fahrer, der mit dem Fuß in den Schnee und/oder das Eis (150) tritt, mit Energie versorgt wird.

13. Schneefahrzeug nach einem der vorhergehenden Ansprüche, wobei der Elektromotor (106) dazu ausgelegt ist, das Traktionsrad (108) rückwärts zu rotieren, um das Schneefahrzeug (100) zurückzusetzen.

14. Schneefahrzeug nach einem der vorhergehenden Ansprüche, wobei das Paar von Kufen (102, 104) dazu ausgelegt ist, einen Rodelschlitten (700) aufzunehmen, der dazu ausgelegt ist, eine oder mehrere Personen (1200) und/oder Waren (1202) zu transportieren.

15. Schneefahrzeug nach einem der vorhergehenden Ansprüche, wobei ein Rahmen des Schneefahrzeugs (100) ein oder mehrere Gelenke (138) umfasst, die derart ausgelegt sind, dass das Schneefahrzeug (100) zur Lagerung und zum Transport zusammenklappbar ist.

16. Schneefahrzeug nach einem der vorhergehenden Ansprüche, wobei das Schneefahrzeug (100) Folgendes umfasst:
eine Lenkanordnung, die eine Lenkachse (122), die an das Traktionsrad (108) gekoppelt ist, einen Lenkholm (124) auf Höhe einer Lenkstange, der an die Lenkachse (122) gekoppelt und dazu ausgelegt und positioniert ist, eine Lenkung des Traktionsrads (108) zu ermöglichen, während ein Fahrer auf dem Paar von Kufen (102, 104) steht; und
einen Befestigungsmechanismus (2200), der dazu ausgelegt ist, vor der Lenkachse (122) ein Zubehör aufzunehmen, wobei das Zubehör eines oder mehreres von Folgendem umfasst: einen Beifahrersitz (2300), eine Lagerbox (2400), eine Kühlbox (2500), eine Heizbox (2500), einen Musikplayer, einen Schneepflug, ein Schneegebläse, eine oder mehrere zusätzliche ladbare Batterien.

17. Schneefahrzeug nach Anspruch 16, wobei das Schneefahrzeug (100) Folgendes umfasst:
eine oder mehrere ladbare Batterien (1402), die dazu ausgelegt sind, dem Elektromotor (106) elektrische Energie bereitzustellen; und
einen Energieausgang (2202), der dazu ausgelegt ist, dem Zubehör (2300, 2500) von der einen oder den mehreren ladbaren Batterien (1402) elektrische Energie (2302, 2502) bereitzustellen.

18. Schneefahrzeug nach einem der vorhergehenden Ansprüche, wobei das Schneefahrzeug (100) Folgendes umfasst:
einen Sitz (2600), der zwischen dem Paar von Kufen (102, 104) positioniert und dazu ausgelegt ist, mindestens einem Fahrer (800) einen Sitz zu bieten.

19. Schneefahrzeug nach einem der vorhergehenden Ansprüche, wobei das Schneefahrzeug (100) dazu ausgelegt ist, ein Mobilitätshilfefahrzeug (2800) aufzunehmen.

20. Schneefahrzeug nach einem der vorhergehenden Ansprüche, wobei das Paar von Kufen (102, 104) jeweils dazu ausgelegt sind, sich von einer Nähe des Traktionsrads (108) zu einer Rückseite des Schneefahrzeugs (100) zu erstrecken, um dem Fahrer (800) eine durchgehende Fußstützenplattform zu bieten.

## Revendications

1. Véhicule pour la neige (100) comprenant :
une paire de patins (102, 104) configurée pour supporter le véhicule pour la neige (100) qui se déplace sur la neige et/ou sur la glace (150) ;
un moteur électrique (106) ; et
une roue de traction (108), alimentée par le moteur électrique (106), et configurée pour provoquer une propulsion pour le véhicule pour la neige (100) tout en roulant en contact avec la neige et/ou la glace (150),
dans lequel la roue de traction (108) est positionnée en face de la paire de patins (102, 104) et **caractérisé en ce que** :
le véhicule pour la neige (100) est du type trottinette des neiges.

2. Véhicule pour la neige selon la revendication 1, dans lequel la paire de patins (102, 104) sont chacun configurés pour s'incliner de sorte qu'un avant (1406) du patin (102, 104) est plus haut qu'un arrière (1408) du patin (102, 104).

3. Véhicule pour la neige selon l'une quelconque des revendications précédentes, dans lequel la paire de patins (102, 104) comprend une paire de skis dimensionnés pour faire glisser le véhicule pour la neige (100) sur une piste comprimée recouverte par la neige et/ou la glace (150), et sur une route entretenue recouverte par la neige et/ou la glace (150).

4. Véhicule pour la neige selon l'une quelconque des revendications précédentes, dans lequel le véhicule pour la neige (100) comprend :
un siège (114) positionné au-dessus de la roue de traction (108) et configuré pour accueillir une personne ; et
un agencement de direction comprenant un essieu de direction (122) couplé avec la roue de traction (108), une barre de direction au niveau du guidon (124) couplée avec l'essieu de direction (122) et configurée et positionnée pour permettre la direction de la roue de traction (108) alors qu'un conducteur est debout sur la paire de patins (102, 104), et une barre de direction au niveau du siège (128) couplée avec l'essieu de direction (122) et configurée et positionnée pour permettre la direction de la roue de traction (108) alors qu'un conducteur est assis sur le siège (114).

5. Véhicule pour la neige selon la revendication 4, dans lequel l'agencement de direction comprend un premier levier d'accélérateur (126) couplé avec la barre de direction au niveau du guidon (124), un second levier d'accélérateur (130) couplé avec la barre de direction au niveau du siège (128) et un commutateur d'alimentation (136) configuré pour activer le premier levier d'accélérateur (126) dans une première position de commutateur et le second levier d'accélérateur (130) dans une seconde position de commutateur.

6. Véhicule pour la neige selon la revendication 4 ou 5, dans lequel les extrémités orientées vers l'avant de la barre de direction au niveau du siège (128) comprennent des phares (132, 134) configurés pour tourner à l'unisson avec un essieu de direction (122).

7. Véhicule pour la neige selon l'une quelconque des revendications précédentes, dans lequel le véhicule pour la neige (100) comprend un repose-pieds (112) configuré et positionné de sorte qu'il sert de ski avant en contact avec une surface supérieure (500) de la neige (150) alors que la roue de traction (108) est partiellement enterrée plus profondément dans la neige (150).

8. Véhicule pour la neige selon la revendication 7, dans lequel le repose-pieds (112) est couplé par un joint avec un cadre du véhicule pour la neige (100) de sorte que le repose-pieds (112) est configuré pour suivre une topographie de la surface supérieure (500) de la neige (150).

9. Véhicule pour la neige selon la revendication 8, dans lequel le repose-pieds (112) est configuré pour pivoter dans une position accueillant des marchandises placées sur le siège (114).

10. Véhicule pour la neige selon l'une quelconque des revendications précédentes, dans lequel le véhicule pour la neige (100) comprend au moins deux pneus (602) couplés avec la paire de patins (102, 104) et configurés pour, dans une position de conduite, être réglables en hauteur et supporter le véhicule pour la neige (100) qui se déplace sur une surface (600) n'ayant pas de neige et/ou de glace ou ayant la neige et/ou la glace recouverte avec du gravier, et dans une position de stockage, laisser la paire de patins (102, 104) supporter le véhicule pour la neige (100) qui se déplace sur la neige et/ou la glace (150).

11. Véhicule pour la neige selon l'une quelconque des revendications précédentes, dans lequel la roue de traction (108) est de type basse pression et/ou la roue de traction (108) est de type pneu neige et/ou la roue de traction (108) comprend des clous.

12. Véhicule pour la neige selon l'une quelconque des revendications précédentes, dans lequel le moteur électrique (106) comprend un mécanisme de déconnexion (110) pour déconnecter le moteur électrique (106) de la roue de traction (108) permettant à la roue de traction (108) d'être mise en roue libre alors que le véhicule pour la neige (100) est alimenté par le conducteur qui donne des coups de pied dans la neige et/ou la glace (150).

13. Véhicule pour la neige selon l'une quelconque des revendications précédentes, dans lequel le moteur électrique (106) est configuré pour faire tourner la roue de traction (108) en sens inverse pour atteler le véhicule pour la neige (100).

14. Véhicule pour la neige selon l'une quelconque des revendications précédentes, dans lequel la paire de patins (102, 104) est configurée pour accueillir un toboggan (700) configuré pour transporter une ou plusieurs personnes (1200) et/ou marchandises (1202).

15. Véhicule pour la neige selon l'une quelconque des revendications précédentes, dans lequel un cadre du véhicule pour la neige (100) comprend un ou plusieurs joints (138) configurés de sorte que le véhicule pour la neige (100) est repliable pour le stockage et le transport.

16. Véhicule pour la neige selon l'une quelconque des revendications précédentes, dans lequel le véhicule pour la neige (100) comprend :
un agencement de direction comprenant un essieu de direction (122) couplé avec la roue de traction (108), une barre de direction au niveau du guidon (124) couplée avec l'essieu de direction (122) et configurée et positionnée pour activer la direction de roue de traction (108) alors que le conducteur est debout sur la paire de patins (102, 104) ; et
un mécanisme de fixation (2200) configuré pour accueillir, en face de l'essieu de direction (122), un accessoire, l'accessoire comprenant un ou plusieurs éléments parmi les suivants : un siège de passager (2300), une boîte de rangement (2400), une glacière (2500), une boîte de chauffage (2500), un lecteur audio, un chasse-neige, une souffleuse à neige, une ou plusieurs batteries rechargeables supplémentaires.

17. Véhicule pour la neige selon la revendication 16, dans lequel le véhicule pour la neige (100) comprend :
une ou plusieurs batteries rechargeables (1402) configurées pour fournir l'alimentation électrique au moteur électrique (106) ; et
une sortie d'alimentation (2202) configurée pour fournir l'alimentation électrique (2302, 2502) pour l'accessoire (2300, 2500) depuis les une ou plusieurs batteries rechargeables (1402).

18. Véhicule pour la neige selon l'une quelconque des revendications précédentes, dans lequel le véhicule pour la neige (100) comprend :
un siège (2600) positionné entre la paire de patins (102, 104) et configuré pour permettre à au moins un conducteur (800) de s'assoir.

19. Véhicule pour la neige selon l'une quelconque des revendications précédentes, dans lequel le véhicule pour la neige (100) est configuré pour accueillir un véhicule d'aide à la mobilité (2800).

20. Véhicule pour la neige selon l'une quelconque des revendications précédentes, dans lequel la paire de patins (102, 104) sont chacun configurés pour s'étendre à partir d'une proximité de la roue de traction (108) jusqu'à un arrière du véhicule pour la neige (100) afin d'offrir une plateforme de repose-pieds continue pour le conducteur (800).
